# EUROPÄISCHE PATENTANMELDUNG

(11) **EP 2 561 950 A1**
(43) Veröffentlichungstag der Anmeldung: **27.02.2013**
(21) Anmeldenummer: 12005976.1
(22) Anmeldetag: 21.08.2012
(51) Int. Cl.: B23K 20/12, B23K 37/053, B23K 37/06, F16L 37/12, B23K 9/035

(54) **Vorrichtung zum Zentrieren, Innenformdrücken, Richten und Spannen von Stumpfstößen rotationssymmetrischer Hohlkörper beim Rührreibschweissverbinden oder Schmelzschweissen**

(30) Priorität: 24.08.2011 EP 11006913
(71) Anmelder: Wartmann Technologie AG, 4538 Oberbipp (CH)
(72) Erfinder: Schenk, Tobias, 5014 Gretzenbach (CH)
(74) Vertreter: Hannig, Wolf-Dieter

(57) **Zusammenfassung**

Die Erfindung betrifft eine Vorrichtung (10) zum Zentrieren, Innenformdrücken, Richten und Spannen von rotationssymmetrischen Hohlkörpern, beispielsweise an einer Flansch-Rohr-Flansch-, Flansch-Rohr- oder Rohr-Rohr-Anordnung, die durch Rührreibschweißen oder Schmelzschweißen im Stumpfstoß verbunden werden, mit einem sich an den Innendurchmesser der Hohlkörper anpassbaren, mittig zur Hohlkörperachse angeordneten Spannkörper (10) mit Antrieb (21).
Der Spannkörper (10) ist als Schweißbadsicherung in Form einer Zentrier-, Innenform, Richt- und Spannscheibe ausgebildet, die in kreissegmentförmige Primär- und Sekundärbacken (14,16) mit jeweils daran radial in Richtung Hohlkörperachse angebrachten hammerförmigen Halte- und Gabelelementen (17) aufgeteilt sind, von denen jedes Halte- und Gabelelement (17) in einer Aussparung (35) eines Trägerelementes (36) geführt und durch einen Primär- bzw. Sekundärhebel (18,19) mit einem Stößel (20) des Antriebs (21) kniehebelartig radial schwenkbar verbunden ist.

## Beschreibung

Die Erfindung betrifft eine Vorrichtung zum Zentrieren, Innenformdrücken, Richten und Spannen von rotationssymmetrischen Hohlkörpern, beispielsweise an einer Flansch-Rohr-Flansch-, Flansch-Rohr- oder Rohr-Rohr-Anordnung, die durch Rührreibschweißen oder Schmelzschweißen im Stumpfstoß verbunden werden, mit einem sich an den Innendurchmesser der Hohlkörper anpassbaren, mittig zur Hohlkörperachse angeordneten Spannkörper mit Antrieb.

### Stand der Technik

Es sind aus dem Stand der Technik eine ganze Reihe von Schweißbadsicherungen für das Stumpfstoßschweißen von rotationssymmetrischen Hohlkörpern wie beispielsweise Rohr-Rohr, Flansch-Rohr-Flansch oder Flansch-Rohranordnungen bekannt (DE 197 20 961C1, DE 31 02 010 A1, DD105576 A1, DD 125 903 A1, US 6 119 916 A). Trotzdem ist das Stumpfstoßschweißen infolge der nur mit einem erheblichen Aufwand betreibbaren visuellen Kontrolle der Wurzel im Inneren der Hohlkörper problematisch geblieben und erfordert regelmäßig aufwändige Nacharbeiten.

DE 197 20 961 C1 beschreibt eine Lösung zur Wurzel-Schweißbadsicherung, insbesondere beim Stupf-Schweißen zweier Rohre, bei dem die Schweißnaht im Inneren der Rohre zur Vermeidung des Durchfallens/Durchbrennens und Verhinderung einer unzulässig starken Wurzelüberhöhung zum Inneren des Rohres abgestützt wird. Die Abstützung erfolgt während des Schweißens lediglich im Bereich unterhalb des Schweißbades, wobei die Abstützung durch Reibung an der Rohrinnenwand zwischen Rohr und Schweißeinheit selbsttätig mitgeführt und wird und nach Beendigung des Schweißvorganges von der Schweißnaht wegbewegt und aus dem Rohr ausgefahren wird.
Die Abstützung läuft bei dieser bekannten Lösung durch Reibschluss an der Innenseite mit der drehenden Rohr-Rohr-Anordnung simultan ab und ist somit einem hohen Verschließ ausgesetzt, der im Lauf der Bearbeitung zur Unwucht führt, was wiederum fehlerhafte Wurzelausbildungen nach sich zieht. Eine stoßseitige Zentrierung der beiden Rohrenden ist mit dieser Anordnung nicht möglich, so dass vor dem Schweißen die beiden Rohrenden geheftet werden müssen.
Außerdem hat diese bekannte Lösung den Nachteil, dass größere Kräfte -wie sie beispielsweise beim Reibrührschweißen durch das mit hoher Drehgeschwindigkeit umlaufende Werkzeug auftreten- zwangläufig in die Rohrenden eingebracht werden, nur mit erheblichen Qualitätseinbußen oder gar nicht aufgenommen werden können

In der DE 31 02 019 C2 ist eine Gegenstützvorrichtung für das Schweißbad beim automatischen Stumpfschweißen beschrieben, die mittels zweier in Umfangsrichtung angeordneter Sätze von Radialkolben einer Innenverbindungseinrichtung fluchtend zusammengehalten sind, wobei die Gegenstützvorrichtung einen Satz von voneinander unabhängigen segmentartigen Kupfereinsätzen als Ausfütterung aufweist, die in Form eines Ringes angeordnet und jeweils fest mit einem darunter zugeordneten Satz von Einsatztragelementen verbunden sind, die ihrerseits jeweils an einem einer Anzahl in Umfangsrichtung angeordneter Radialkolben abgestützt sind.
Mit der Vielzahl der am Innenumfang verteilten Radialkolben baut diese bekannte Schweißbadsicherung verhältnismäßig aufwändig und groß.
Eine andere bekannte Lösung (US 4 177 914 A1) offenbart zum formschlüssigen Anpressen einen an den Innendurchmesser des Rohrs ausgelegten Rings mit senkrecht gegen die Rohrinnenwand drückbaren Gleitelementen, mit mittels eines Antriebs gehoben oder gesenkt werden können.
Des Weiteren ist aus der DD 125 903 A1 eine Schweißbadsicherung für regelmäßig und unregelmäßig gekrümmte Schweißnähte, insbesondere Rohrrundnähte, bekannt, bei der an einer auf den Rohrquerschnitt mittig angeordneten Scheibe ein oder mehrere Rollenhalter beweglich angebracht sind, die am anderen Ende frei drehbare Rollen halten, wobei die Scheibe durch einen Antrieb in Rotation versetzt wird.
Aus der US 6 119 916 A) ist weiterhin eine Schweißbadsicherung bekannt, die sich aus einem im Rohrinneren angeordneten Ringsystem aus einer Vielzahl entlang des Innenumfangs verteilter Schweißschuhe zusammensetzt, die mittels Federn gegen die innere Rohrwandung durch einen Spannmechanismus drücken. Der Spannmechanismus wird durch eine von einem pneumatischen, hydraulischen oder elektrischen Antrieb ausgelöste Radialbewegung entweder in seine Spann- oder Entspannlage gebracht.
Ein solches Ringsystem aus Schweißschuhen mag zwar eine sichere Positionierung der Schweißbadsicherung am Schweißspalt ermöglichen, jedoch ist es mit diesem Stand der Technik nicht möglich, unterschiedliche Rohrovalitäten der beiden im Stumpfstoß liegenden Rohrenden oder die Geradheit der Rohre zu beeinflussen.
Im Übrigen ist diese bekannte Schweißbadsicherung auch nicht für das Verbindungsschweißen an rotierenden Rohren geeignet wie es beim Rührreibschweißen allgemein bekannt ist.
Die Stumpfstoßverbindung zweier mittels Rührreibschweißen zu verbindender rotationssymmetrischer Körper, beispielsweise eine Rohr-Rohr-Verbindung oder Flansch-Rohr-FlanschVerbindung erfordert ein Halten der beiden rotierenden Rohrelemente in definierter Lage während der gesamten Rührreibschweißoperation, wobei die Stoßflächen in der Stoßfuge keinen Luftspalt und zumindest im Stoßbereich voneinander keine Unrundheit besitzen dürfen sowie die Wanddicken der beiden Körper in sehr engen Toleranzen übereinstimmen müssen. Mit anderen Worten bedeutet dies, dass die Stumpfstoßvorbereitung ursächlich für die Qualität einer Rührreibschweißverbindung von Rohrteilen ist, weil die Lage und Form des Stumpfstoßes unmittelbar die zum Rührreibschweißen erforderlichen Anpresskräfte beeinflusst. All diesen bekannten Lösungen ist der Nachteil gemeinsam, dass die Schweißbadsicherungen nur die Funktion des Absichern gegen das Herausfallen des Schweißgutes aus der Schweißfuge sichert, jedoch nicht in der Lage ist, axiale Spannkräfte zum Übertragen von Drehbewegungen des einen Rohrteils über den Stoßbereich in den anderen Rohrteil einzuleiten.
Die Lösungen können weiterhin auch keine Zentrierung der beiden zu verbindenden Rohrenden zueinander sicherstellen und auch keine Kräfte zum örtlichen Verformen der Rohrenden in die Rohre aufzubringen, um Rohrovalitäten an den Stirnenden nahezu zu eliminieren bzw. auf eine für den Schweißprozess geeignete Toleranz zu bringen.

### Aufgabenstellung

Bei diesem Stand der Technik liegt der Erfindung die Aufgabe zugrunde, eine Schweißbadsicherung zu schaffen, mit der das Zentrieren von rotationssymmetrischen Hohlteilen aneinander, beispielsweise Rohr-Rohr-, Rohr-Flansch-Rohr-oder Flansch-Rohr-Anordnungen, und zugleich die Übertragung von ausreichend hohen Verformungs- und Spannkräften auf den inneren Stoßbereich der Körper bei gleichzeitiger Reduzierung der Nacharbeit unter Einsparung von Material und Gewährleitung wirtschaftlicher Vorteile möglich ist.

Diese Aufgabe wird durch eine Vorrichtung der eingangs genannten Art mit den Merkmalen des Anspruches 1 gelöst.

Vorteilhafte Ausgestaltungen der Vorrichtung und des Verfahrens sind den Unteransprüchen entnehmbar.

Die erfindungsgemäße Lösung geht von der Erkenntnis aus, den Spannkörper als Schweißbadsicherung in Form einer Zentrier-, Innenform, Richt- und Spannscheibe auszubilden ist, die in kreissegmentförmige Primär- und Sekundärbacken mit jeweils daran radial in Richtung Hohlkörperachse angebrachten hammerförmigen Halte- und Gabelelementen aufgeteilt sind, von denen jedes Halte- und Gabelelement in einer Aussparung eines Trägerelementes geführt und durch einen Primär- bzw. Sekundärhebel mit einem Stößel des Antriebs kniehebelartig radial schwenkbar verbunden ist.

In einer bevorzugten Ausgestaltung der erfindungsgemäßen Vorrichtung umfasst die Zentrier-, Innenform-, Richt- und Spannscheibe:
a) einen Primärbackenkörper aus mindestens drei Primärbacken, die unter Bildung von Lücken kreissegmentförmig am Umfang der Scheibe angeordnet und von dem sich in Richtung Zentrum der Scheibe erstreckenden hammerförmigen Halte- und Gabelelement radial gehalten sind, an dem der Primärhebel mit seinem einen Ende schwenkbar befestigt ist,
b) einen Sekundärbackenkörper aus mindestens drei Sekundärbacken, die von dem sich in Richtung Zentrum der Scheibe erstreckenden Halte- und Gabelelement radial gehalten sind, an der ein Sekundärhebel mit seinem einen Ende schwenkbar befestigt ist, wobei die Sekundärbacken zueinander versetzt entlang des Umfangs so angeordnet sind, dass sie die Lücken zwischen zwei Primärbacken schließen können,
c) das Trägerelement mit radial angeordneten Ausnehmungen zum Aufnehmen und Verschieben der Halte- und Gabelelemente der Primär- und Sekundärbacken in radialer Richtung,
d) den senkrecht in einem Richtung Zentrum der Scheibe verschiebbaren Stößel, an dem die stößelseitigen Enden der Primär- und Sekundärhebel für die Primär- und Sekundärbacken schwenkbar gehalten sind,
e) den pneumatischen, hydraulischen oder elektrischen Antrieb für den Stößel, um die Zentrier-, Innenform-, Richt- und Spannkräfte zu erzeugen und die Primärbacken und Sekundärbacken radial gegen die inneren Flächen der aneinanderstoßenden Körper zum Erzeugen einer nahezu übereinstimmenden Rundheit und Geradheit im Stoßbereich der aneinanderstoßenden Körper zu spannen oder zu entspannen.

In einer weiteren bevorzugten Ausgestaltung der erfindungsgemäßen Vorrichtung greift die Zentrier-, Innenform-, Richt- und Spannscheibe in das Innere des Stoßbereichs der zu verbindenden Hohlkörper ein, wobei in einem ersten Spannzustand etwa 65 bis 70% des zum Stoßbereich gehörenden Innenumfangs der Körper mittels durch Lücken der voneinander beabstandeten Primärbacken mit einer zum Zentrieren ausreichenden Kraft beaufschlagt und in einem zweiten Spannzustand die erforderlichen Innenformkräfte auf den gesamten Innenumfang des Stoßbereichs durch ein radiales Ausfahren von Sekundärbacken in die Lücken zwischen den Primärbacken mittels kniehebelartiger Kraftverstärkung auf mindestens das Zehnfache der Zentrierkräfte aufgebracht werden, so dass der Stirnbereich der Zentrier-, Innenform-, Richt- und Spannscheibe eine geschlossene Fläche für das Innenformdrücken und Richten auf eine übereinstimmende Geometrie und Form im Stoßbereich bildet, und dass zum Lösen der Scheibe zunächst die Sekundärbacken aus dem Bereich zwischen den Primärbacken und dann die Primärbacken radial entgegengesetzt zur Innenwand der Körper eingefahren werden.

In einer bevorzugten weiteren Ausgestaltung der erfindungsgemäßen Vorrichtung weist der Sekundärhebel gegenüber dem Primärhebel ein Längenverhältnis von mindestens 1 : 1,3 auf, wobei das stößelseitige Gelenk des Primärhebels um ein definiertes Maß gegenüber dem stößelseitigen Gelenk des Sekundärhebels in Richtung Primär- bzw. Sekundärbacken axial verschoben angeordnet ist und der Sekundärhebel in seiner Strecklage einen Anstellwinkel (ß) von 1 bis 2° einnimmt.
Dies gewährleistet, dass sich die Primär- und Sekundärbacken bei ihrem Aus- und Einfahren nicht gegenseitig behindern können.

Vorteilhaft ist auch, wenn die Primärbacken und Sekundärbacken jeweils an ihren zueinander zugewandten Enden eine Abschrägung aufweisen, die aufeinander nach Lage und Winkel abgestimmt sind, wobei die Abschrägung der Primärbacken dem Stößel zugewandt und die Abschrägung der Sekundärbacken dem Stößel abgewandt ist.
Dies stellt sicher, dass die Stirnfläche der Zentrier-, Innenform-, Richt- und Spannscheibe im Spannzustand geschlossen ist und sich vollkommen formschlüssig an die Innenwand des Stoßbereiches der beiden Hohlkörper anlegt.

In weiterer Ausgestaltung der erfindungsgemäßen Vorrichtung kann der Antrieb der Zentrier-, Innenform-, Richt- und Spannscheibe pneumatisch, hydraulisch oder elektrisch angetrieben sein. Besonders der pneumatische Antrieb hat den Vorteil, dass er platzsparend baut.

Von besonderer Bedeutung für die Mehrfachfunktion der Zentrier-, Innenform-, Richt- und Spannscheibe ist es, dass diese eine ausreichende Breitenabmessung im Stirnbereich besitzt und in beide Innenbereiche der zu verbindenden Hohlkörper soweit hineinreicht, dass der beim Rührreibschweißen bzw. Schmelzschweißen auftretende Erweichungsvorgang entlang der Stoßfuge abgestützt wird und zugleich die axialen Spannkräfte in Richtung Längsachse der Flansch-Rohr-Flansch-Anordnung übertragen werden können, ohne die erweichte Stoßfuge axial zu verformen, und andererseits vor dem Schweißvorgang ein Zentrieren nach der Innengeometrie der Hohlkörper sowie das örtliche Verformen auf einen nahezu übereinstimmenden Innendurchmesser ohne zusätzliche Einrichtvorgänge ermöglicht wird.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel für ein Flansch-Rohr-Flansch-Element näher erläutert werden.

Es zeigen

Fig. 1 eine Schnittdarstellung eines in den Stoßbereich zweier Hohlkörper eingesetzten Zentrier-, Innenform-, Richt- und Spannscheibe,

Fig. 2a und 2b Seitenansichten der Zentrier-, Innenform-, Richt-, und Spannscheibe mit Verweis auf die Schnitte A-A, B-B, C-C und D-D,

Fig. 3 einen Schnitt A-A der Zentrier-, Innenform-, Richt- und Spannscheibe gemäß Fig. 2a,

Fig. 4 einen Schnitt B-B der Zentrier-, Innenform-, Richt- und Spannscheibe gemäß Fig.2a,

Fig. 5 einen Schnitt C-C der Zentrier-, Innenform-, Richt- und Spannscheibe gemäß Fig. 2b,

Fig. 6 einen Schnitt D-D der Zentrier-, Innenform-, Richt- und Spannscheibe gemäß Fig. 2b und

Fig. 7a bis 7c eine perspektivische Darstellung der Zentrier-, Innenform-, Richt- und Spannscheibe in ungespanntem und gespanntem Zustand als vollständige und demontierte Funktionseinheit.

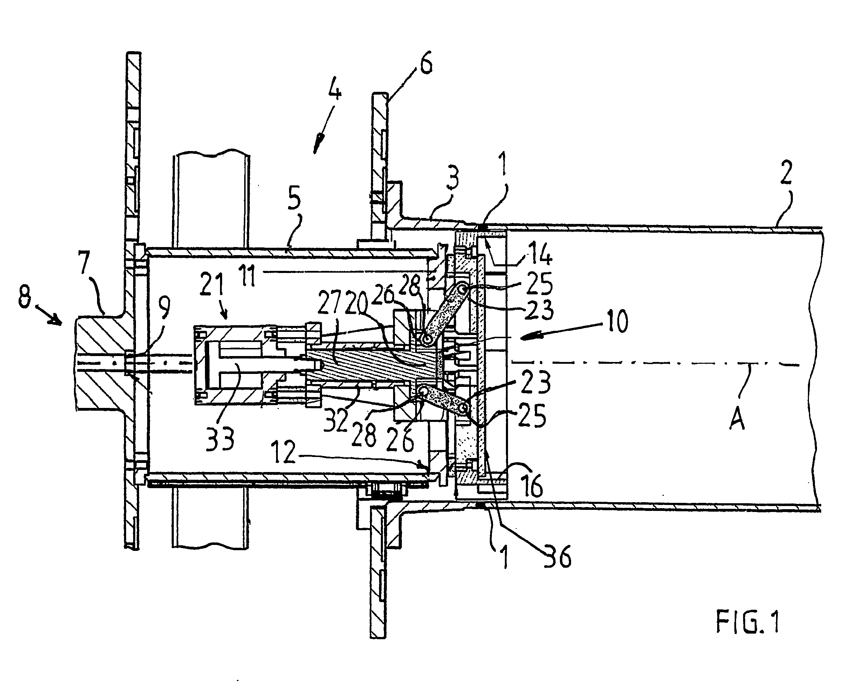

Die Fig. 1 zeigt den Stoßbereich zweier rotationssymmetrischer Hohlkörper, beispielsweise eines Rohres und eines Flansches, die an ihren Stirnenden einen Stumpfstoß 1 bilden und durch Rührreibschweißen verbunden werden sollen.
Die Flansch-Rohr-Anordnung setzt sich in diesem Beispiel aus einem Aluminiumrohr 2 der Qualität EN-AW6083 und einem Flansch 3 der Gussqualität AlSi7Mg0.3 zusammen. Das Aluminiumrohr 2 und der Flansch 3 haben einen identischen Innendurchmesser. Die Wandstärke von Rohr und Flansch beträgt 7 mm und die Länge des Rohres 8600 mm.

Der Flansch 3 ist an einer drehbaren Flanschaufnahme 4 festgelegt, an der eine Hülse 5 fixiert ist, an welche eine Planscheibe 6 lösbar befestigt ist. Die Hülse 5 ist einerends an der aus einer Hohlwelle 7 ausgeführten Antriebswelle 8 befestigt, so dass durch diese eine Versorgungsleitung 9 für den Antrieb des Stößels der Zentrier-, Innenform-, Richt- und Spannscheibe 10 geführt werden kann. Anderenends weist die Hülse 5 einen Befestigungsflansch 11 zur Befestigung der Zentrier-, Innenform-, Richt- und Spannscheibe 10 auf.
Die Planscheibe 6 ist gegenüber dem aufragenden Hülsenende 12 in solch einem Abstand zurückversetzt angeordnet, dass der an der Planscheibe 6 befestigte Flansch 3 mit seinem Rohrteil gegenüber dem Hülsenende 12 vorsteht, wodurch unter dem Stumpfstoßbereich 1 zwischen Flansch 3 und Rohr 2 ein ausreichender Platz zum Einbringen der Zentrier-, Innenform-, Richt- und Spannscheibe 10 verbleibt.
Das Aluminiumrohr 2 wird an das Stirnende der Flansches 3 angesetzt und ist -wie zuvor beschrieben- an einer entsprechenden nicht dargestellten, drehbar angetriebenen Aufnahme befestigt.

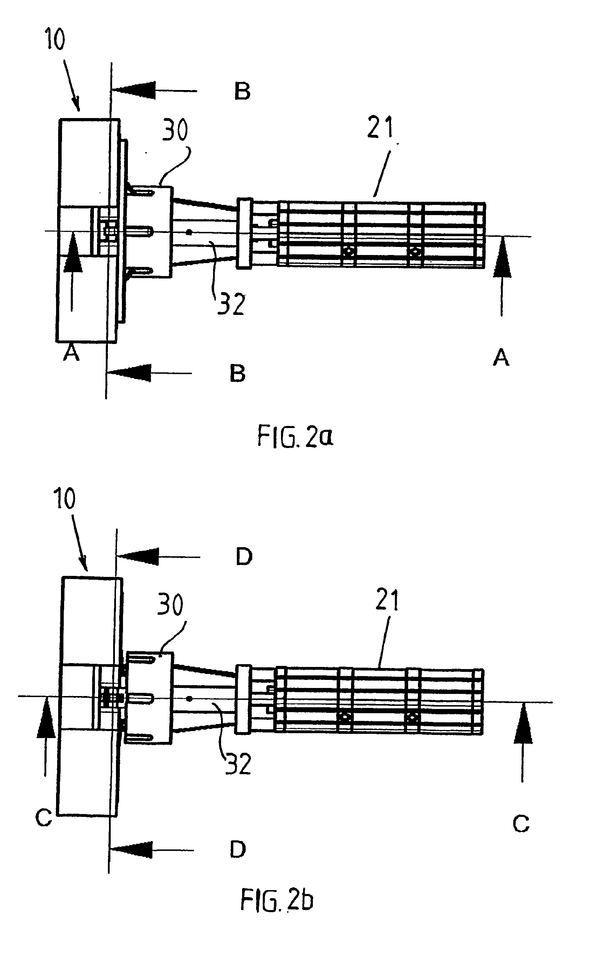

Die Fig. 2a, 2b und 3bis 7 zeigen die pneumatische Zentrier-, Innenform-, Richt-, und Spannscheibe 10, die sich aus einem Primärbackenkörper 13 mit einzelnen Primärbacken 14, einem Sekundärbackenkörper 15 mit einzelnen Sekundärbacken 16, Halte- und Gabelelementen 17, die über Primär- und Sekundärhebel 18 bzw. 19 mit einem Stößel 20 kniehebelartig gelenkig verbunden sind, und einem pneumatischen Antrieb 21 für den Stößel 20.

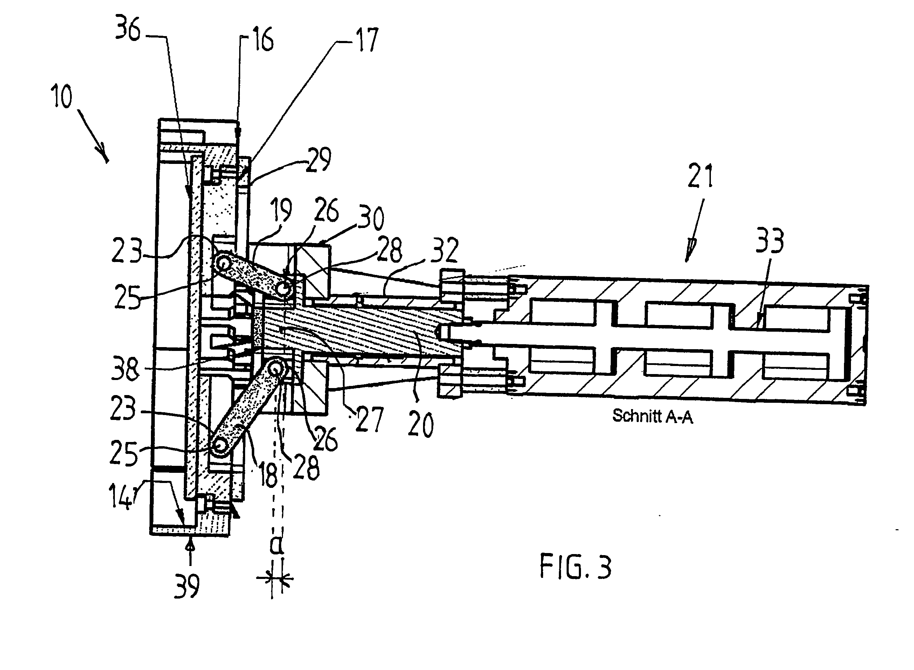

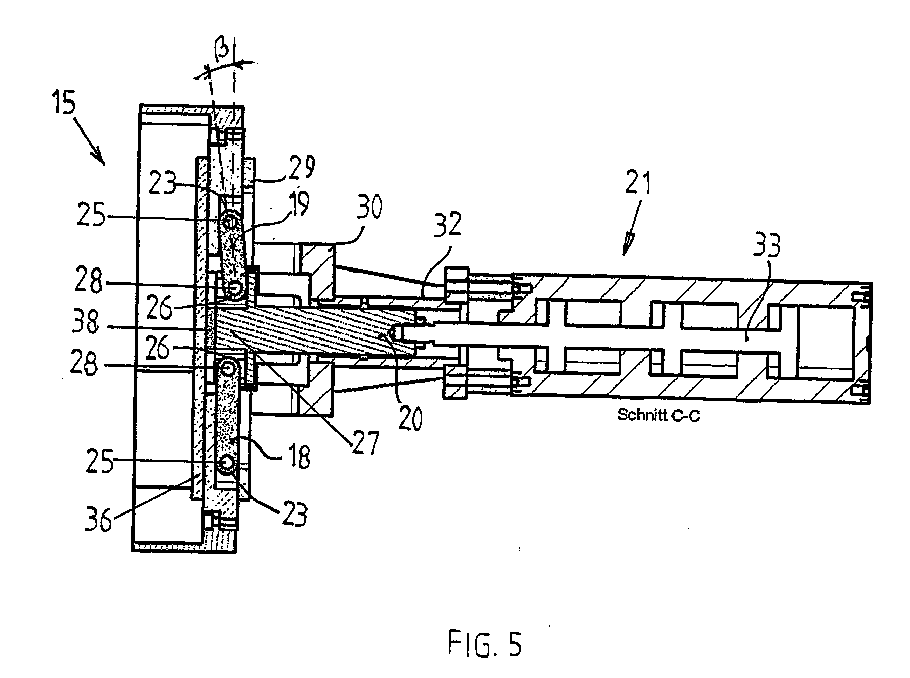

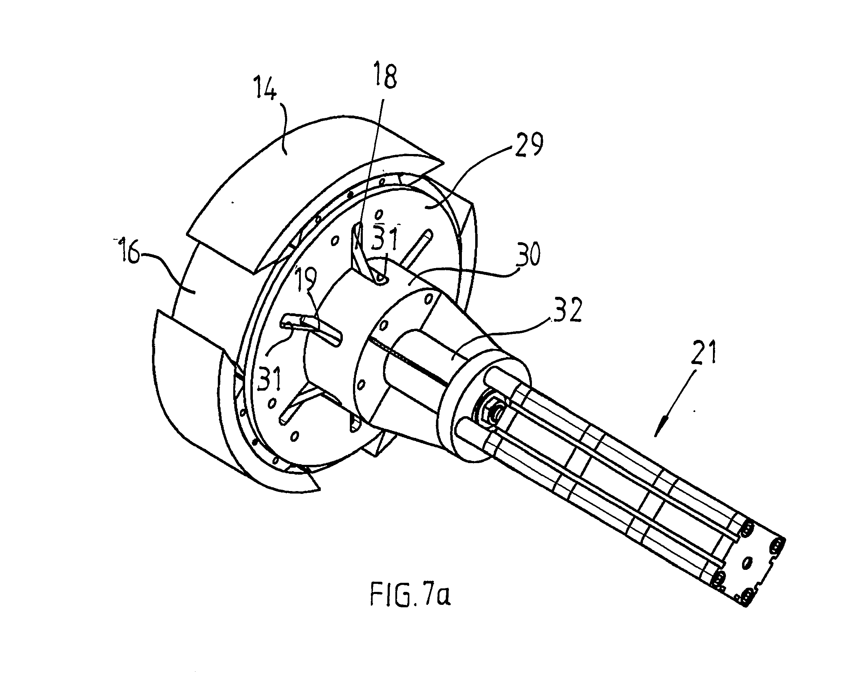

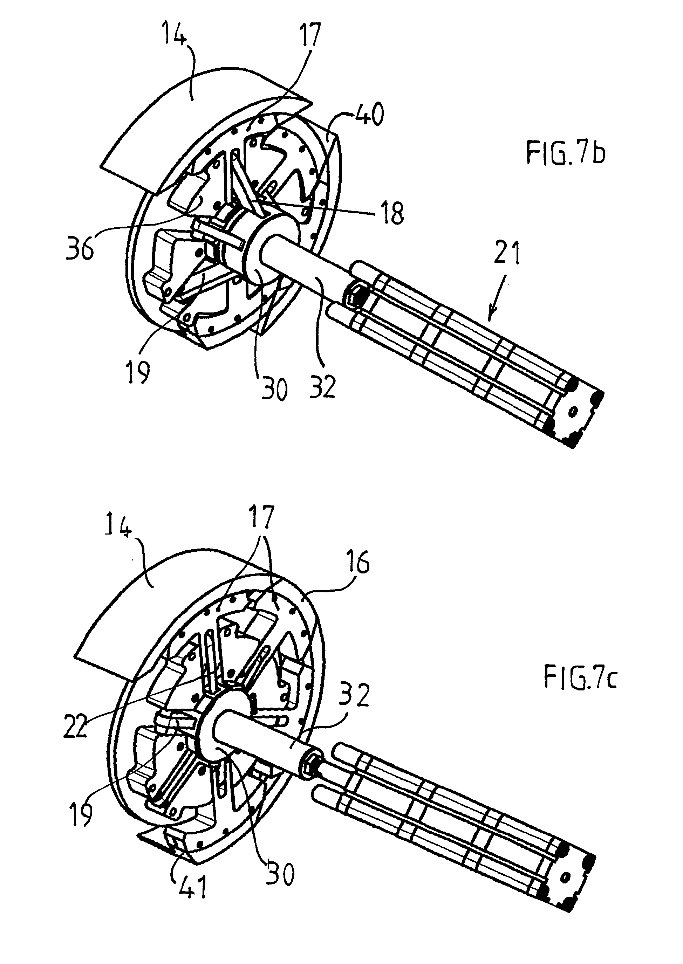

Unter Bezug auf die Fig. 3 und 5 ist zwischen den Gabelarmen 22 des Halte- und Gabelelementes 17 der Primärbacken 14 und der Sekundärbacken 16 jeweils der Primärhebel 18 bzw. Sekundärhebel 19 mit seinem der Primär- bzw. Sekundärbacke zugewandten kopfseitigen Ende 23 in der Gabel 24 in einem backenseitigen Gelenk 25 schwenkbar gelagert, das aus einem Zylinderstift, einem Loch in den Hebeln 18 bzw. 19 und entsprechenden Aufnahmebohrungen in den Gabeln 24 gebildet ist.
Das Gelenk 25 befindet sich in Richtung der Kopfseite des Halte- und Gabelelementes 17, so dass die Primär- und Sekundärhebel 18 bzw. 19 in der Lage sind, die Schwenkbewegung innerhalb des zwischen den Gabeln 24 vorhandenen Freiraumes auszuführen.
Die Primär- und Sekundärhebel 18 bzw. 19 sind mit ihrem anderen, dem Primär- bzw. Sekundärbacken abgewandten Ende 26 am Stößelkopf 27 des Stößels 20 jeweils in einem stößelseitigen Gelenk 28 schwenkbar gelagert, das ebenso aus einem Zylinderstift, einem weiteren Loch im stößelseitigen Ende 26 der Hebel 18 bzw. 19 und Aufnahmebohrungen im Stößelkopf 27 für den Zylinderstift gebildet wird.
Der Stößelkopf 27 mit seinen Gelenken 28 ist von einem an einer Abstützplatte 29 befestigten Gelenkgehäuse 30 senkrecht gleitverschieblich in Flucht des Zentrums der Zentrier-, Innenform-, Richt- und Spannscheibe 10 aufgenommen, wobei die Abstützplatte 29 und das Gelenkgehäuse 30 mit zueinander fluchtenden Ausnehmungen 31 versehen sind, durch die die Schwenkbewegung der Hebel 18 bzw. 19 bei einer Bewegung des Stößels 20 verläuft (siehe Fig. 7a, 7b). Auf dem Gelenkgehäuse 30 ist ein zylindrisches Stößelgehäuse 32 befestigt und abgestützt, in dem der Stößel 20 gleitverschieblich gelagert ist und seine Hubbewegung in Flucht des Zentrums der Zentrier-, Innenform-, Richt- und Spannscheibe 10 ausführen kann. Der Stößel 20 wird durch eine Kolbenstange 33 des pneumatischen Antriebs 21 betätigt.

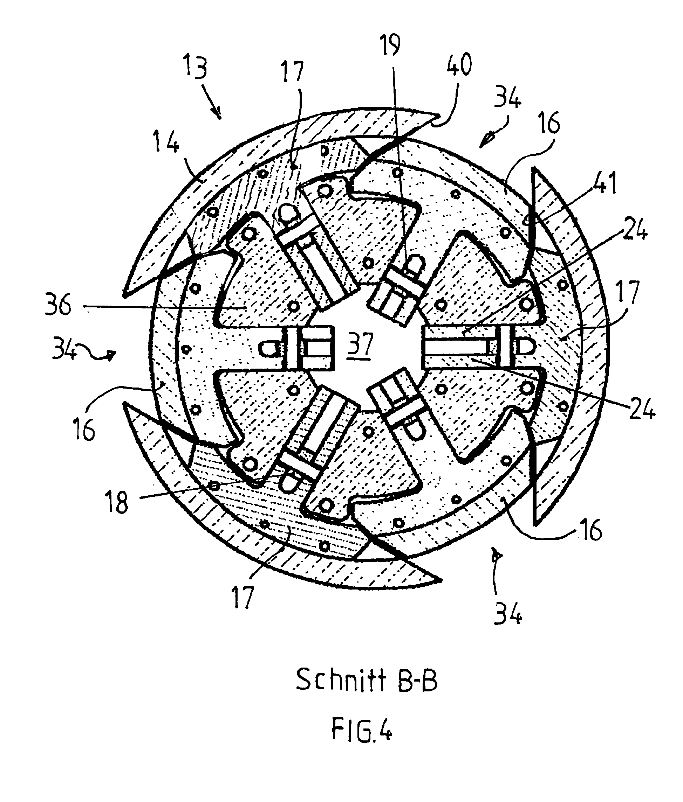

Wie in Fig. 4 gezeigt, sind die mindestens drei Primärbacken 14 auf Lücke 34 im Abstand voneinander kreissegmentförmig am Umfang der Zentrier-, Innenform-, Richt- und Spannscheibe 10 angeordnet und von je einem hammerförmigen Halte- und Gabelelement 17 getragen, das in radial angeordneten Ausnehmungen 35 eines Trägerelementes 36 linear in radialer Richtung verschiebbar einliegt. Bei Bewegung der Kolbenstange 33 in Flucht des Zentrums der Zentrier-, Innenform-, Richt- und Spannscheibe 10 auf den Stößel 20 wird diese Linearbewegung durch die angelenkten Primär- und Sekundärhebel 18 bzw. 19 in eine radiale Bewegung der Primär- und Sekundärbacken 14 bzw. 16 unter kniehebelartiger Kraftverstärkung umgesetzt. Die Primärhebel 14 haben gegenüber den Sekundärhebeln 16 eine größere Länge und ihre Gelenke 28 sind gegeneinander in Richtung der Primär- und Sekundärbacken 14 bzw. 16 so versetzt angeordnet, so dass bei Bewegung des Stößels 20 in Flucht des Zentrums der Zentrier-, Innenform-, Richt- und Spannscheibe 10 zunächst die Primärbacke 14 in radialer Richtung verschoben und gegen die Innenseite des Flansches 3 bzw. Rohres 2 gedrückt wird, was zunächst eine Zentrierung von Flansch und Rohr im Stumpfstoß 1 bewirkt. Bedingt durch die kürzere Länge des Sekundärhebels 16 beginnt die radiale Bewegung der Sekundärbacken 19 erst nachdem die Bewegung der Primärbacken 14 begonnen hat und die maximale Verformungskraft auf den inneren Bereich von Flansch 3 und Rohr 2 wird erreicht, wenn die Primärhebel 18 und die Sekundärhebel 19 zueinander ihre Strecklage erreicht haben. Beispielsweise wird eine Kraftverstärkung gegenüber den Zentrierkräften um mindestens das Zehnfache erreicht, wenn die Längenverhältnisse der Sekundär- zur Primärhebel von 1:1,3 betragen. Im vorliegenden Beispiel liegen die Zentrierkräfte zwischen 2000 bis 6000 N, die erreichten Innenformkräfte zwischen 20000 bis 60000 N. Zum Entspannen der Zentrier-, Innenform-, Richt- und Spannscheibe 10 nimmt der Sekundärhebel 19 in der Strecklage nicht ganz eine 90°-Stellung ein, so dass beim Rückhub des Stößels 20 zunächst der Sekundärhebel 19 die Sekundärbacken 16 radial nach innen bewegt und danach erst die Primärbacken 14 zurückgezogen werden. Der Anstellwinkel ß des Sekundärhebels 19 liegt bei 1-2°.
Wie Fig. 5 verdeutlicht, ist der Stößelkopf 27 in den von den Primärbacken 14 und Sekundärbacken 16 im Zentrum der Zentrier-, Innenform-, Richt- und Spannscheibe 10 begrenzten Freiraum 37 eingetaucht und hat auf einer am Trägerelement 36 befestigten Anschlagplatte 38 aufgesetzt.

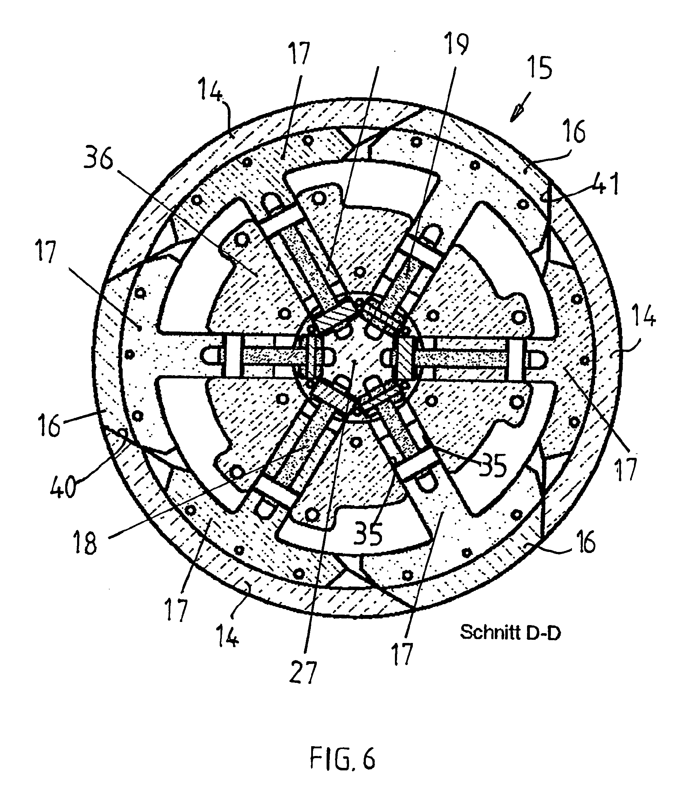

Die Fig. 6 und 7c zeigen die Zentrier-, Innenform-, Richt- und Spannscheibe 10 im ausgefahrenen Zustand. Die Primärbacken 14 und Sekundärbacken 16 bilden entlang ihres äußeren Umfangs einen vollkommenen geschlossenen Stirnbereich 39, der beispielsweise eine Breite zwischen 10 mm bis 50 mm, vorzugsweise 30 mm besitzen kann. In Bezug auf den Stumpfstoß 1 nimmt die Zentrier-, Innenform-, Richt- und Spannscheibe 10 eine komplexe Funktion wahr, die darin besteht, dass der Stumpfstoß 1 in eine für das Rührreibschweißen definierte Lage gebracht und in dieser Lage während des Rührreibschweißens fixiert wird. Dies bedeutet, dass die Zentrier-, Innenform-, Richt- und Spannscheibe 10 zunächst den Flansch 3 und das Rohr 2 im Stumpfstoß 10 zueinander zentriert, anschließend vorhandene Unrundheiten/Ovalitäten von Rohr und Flansch durch ein örtliches Innenformdrücken und Richten im Stoßbereich weitgehend beseitigt sowie diesen Zustand durch ein Spannen mit hohen Spannkräften während des Rührreibschweißens aufrechterhält, damit der Rührreibschweißstift im Stumpfstoß 1 eine definierte Lage, beispielsweise eine definierte Eindringtiefe, einnehmen kann. Unabhängig von diesen Funktionen nimmt die Zentrier-, Innenform-, Richt- und Spannscheibe 10 auch die Funktion der Schweißbadsicherung zur Stabilisierung des erweichten Stoßbereichs, des Widerlagers für die von Rührreibschweißwerkzeug aufgebrachten Anpresskräfte wahr.

Die Zentrier-, Innenform-, Richt- und Spannscheibe 10 bildet im gespannten Zustand entlang ihres äußeren Umfangs einen vollkommen geschlossenen Stirnbereich 39, bei beispielsweise eine Breite zwischen 10 bis 50 mm, vorzugsweise 30 mm, besitzen kann. Dies wird durch Abschrägungen 40 und 41 an den Enden der Primär- und Sekundärbacken 14 bzw. 16 möglich, die aufeinander nach Lage und Winkel abgestimmt sind, wobei die Abschrägung 40 der Primärbacke 14 dem Stößel 20 zugewandt und die Abschrägung 41 der Sekundärbacke 16 dem Stößel abgewandt ist.

### Bezugszeichenliste

| | |
|---|---|
| Stumpfstoß/Sumpfstoßbereich von Rohr und Flansch | 1 |
| Aluminiumrohr | 2 |
| Flansch | 3 |
| Flanschaufnahme | 4 |
| Hülse | 5 |
| Planscheibe | 6 |
| Hohlwelle | 7 |
| Antriebswelle | 8 |
| Versorgungsleitung | 9 |
| Zentrier-, Innenform-, Richt- und Spannscheibe | 10 |
| Befestigungsflansch | 11 |
| Hülsenende | 12 |
| Primärbackenkörper | 13 |
| Primärbacken | 14 |
| Sekundärbackenkörper | 15 |
| Sekundärbacken | 16 |
| Halte- und Gabelelement | 17 |
| Primärhebel | 18 |
| Sekundärhebel | 19 |
| Stößel | 20 |
| Antrieb für 20 | 21 |
| Gabelarme | 22 |
| Kopfseitiges Ende von 18, 19 | 23 |
| Gabel | 24 |
| Backenseitiges Gelenk | 25 |
| Stößelseitiges Ende von 18, 19 | 26 |
| Stößelkopf | 27 |
| Stößelseitiges Gelenk | 28 |
| Abstützplatte | 29 |
| Gelenkgehäuse | 30 |
| Ausnehmungen in 29, 30 | 31 |
| Stößelgehäuse | 32 |
| Kolbenstange | 33 |
| Lücke zwischen den Primärbacken | 34 |
| Ausnehmungen in 36 | 35 |
| Trägerelement | 36 |
| Freiraum | 37 |
| Anschlagplatte | 38 |
| Stirnbereich von 10 | 39 |
| Abschrägung von 14 | 40 |
| Abschrägung von 16 | 41 |
| Hohlkörperachse | A |
| Versatzmaß der Gelenke 28 | a |
| Anstellwinkel des Sekundärhebels | ß |

## Patentansprüche

1. Vorrichtung zum Zentrieren, Innenformdrücken, Richten und Spannen von rotationssymmetrischen Hohlkörpern, beispielsweise an einer Flansch-Rohr-Flansch-, Flansch-Rohr-oder Rohr-Rohr-Anordnung, die durch Rührreibschweißen oder Schmelzschweißen im Stumpfstoß verbunden werden, mit einem sich an den Innendurchmesser der Hohlkörper anpassbaren, mittig zur Hohlkörperachse (A) angeordneten Spannkörper (10) mit Antrieb (21), **dadurch gekennzeichnet, dass** der Spannkörper als Schweißbadsicherung in Form einer Zentrier-, Innenform, Richt- und Spannscheibe ausgebildet ist, die in kreissegmentförmige Primär- und Sekundärbacken (14,16) mit jeweils daran radial in Richtung Hohlkörperachse (A) angebrachten hammerförmigen Halte- und Gabelelementen (17) aufgeteilt sind, von denen jedes Halte- und Gabelelement (17) in einer Aussparung (35) eines Trägerelementes (36) geführt und durch einen Primär- bzw. Sekundärhebel (18,19) mit einem Stößel (20) des Antriebs (21) kniehebelartig radial schwenkbar verbunden ist.

2. Vorrichtung nach Anspruch 1, **dadurch gekennzeichnet, dass** die Zentrier-, Innenform-, Richt- und Spannscheibe (10) umfasst:
a) einen Primärbackenkörper (13) aus mindestens drei Primärbacken (14), die unter Bildung von Lücken (34) kreissegmentförmig am Umfang der Scheibe (10) angeordnet und von dem in Richtung Zentrum der Scheibe (10) erstreckenden hammerförmigen Halte- und Gabelelement (17) radial gehalten sind, an der der Primärhebel (18) mit seinem einen Ende (23) schwenkbar befestigt ist,
b) einen Sekundärbackenkörper (15) aus mindestens drei Sekundärbacken (16), die von dem sich in Richtung Zentrum der Scheibe (10) erstreckenden Halte- und Gabelelement (17) radial gehalten sind, an der ein Sekundärhebel (19) mit seinem einen Ende (23) schwenkbar befestigt ist, wobei die Sekundärbacken (16) zueinander versetzt entlang des Umfangs so angeordnet sind, dass sie die Lücken (34) zwischen zwei Primärbacken (14) schließen können,
c) das Trägerelement (36) mit radial angeordneten Ausnehmungen (35) zum Aufnehmen und Verschieben der Halte- und Gabelelemente (17) der Primär- und Sekundärbacken (14,16) in radialer Richtung,
d) den senkrecht in einem Richtung Zentrum der Scheibe (10) verschiebbaren Stößel (20), an dem die stößelseitigen Enden (26) der Primär- und Sekundärhebel (18,19) für die Primär- und Sekundärbacken (14,16) schwenkbar gehalten sind,
e) den Antrieb (21) für den Stößel (20) zum Erzeugen der Zentrier-, Innenform-, Richt- und Spannkräfte und zum Spannen und Entspannen der Primärbacken (14) und Sekundärbacken (16) radial gegen die inneren Flächen der aneinanderstoßenden Körper (2,3) zum Erzeugen einer nahezu übereinstimmenden Rundheit und Geradheit im Stoßbereich der aneinanderstoßenden Körper.

3. Vorrichtung nach Anspruch 1, **dadurch gekennzeichnet, dass** die Zentrier-, Innenform-, Richt- und Spannscheibe (10) in das Innere des Stoßbereichs der zu verbindenden Hohlkörper (2,3) eingreift und in einem ersten Spannzustand etwa 65 bis 70% des zum Stoßbereich gehörenden Innenumfangs der Körper (2,3) mittels durch Lücken (34) der voneinander beabstandeten Primärbacken (14) zum Zentrieren beaufschlagt und in einem zweiten Spannzustand die erforderlichen Innenformkräfte auf den gesamten Innenumfang des Stoßbereichs durch ein radiales Ausfahren von Sekundärbacken (16) in die Lücken (34) zwischen den Primärbacken (14) mittels kniehebelartiger Kraftverstärkung auf mindestens das Zehnfache der Zentrierkraft aufgebracht werden, so dass der Stirnbereich (39) der Zentrier-, Innenform-, Richt- und Spannscheibe (10) eine geschlossene Fläche für das radiale Innenformdrücken und Richten auf eine übereinstimmende Geometrie und Form im Stoßbereich bildet, und dass zum Lösen der Scheibe (10) zunächst die Sekundärbacken (16) aus dem Bereich zwischen den Primärbacken (14) und dann die Primärbacken (14) radial entgegengesetzt zur Innenwand der Körper (2,3) eingefahren werden.

4. Verfahren nach Anspruch 1, **dadurch gekennzeichnet, dass** der Sekundärhebel (19) gegenüber dem Primärhebel (18) ein Längenverhältnis von mindestens 1 : 1,3 aufweist, wobei das stößelseitige Gelenk (28) des Primärhebels (18) um ein definiertes Maß (a) gegenüber dem stößelseitigen Gelenk (28) des Sekundärhebels (19) in Richtung Primär- bzw. Sekundärbacken (14,16) axial verschoben angeordnet ist und der Sekundärhebel (16) in seiner Strecklage einen Anstellwinkel (ß) von 1 bis 2° aufweist.

5. Verfahren nach Anspruch 1 und 4, **dadurch gekennzeichnet, dass** die Primärbacken (14) und Sekundärbacken (16) jeweils an ihren zueinander zugewandten Enden eine Abschrägung (40, 41) aufweisen, die aufeinander nach Lage und Winkel abgestimmt sind, wobei die Abschrägung (40) der Primärbacken (14) dem Stößel (20 zugewandt und die Abschrägung (41) der Sekundärbacken (16) dem Stößel (20) abgewandt ist.

6. Verfahren nach Anspruch 1 **dadurch gekennzeichnet, dass** die Zentrier-, Innenform-, Richt- und Spannscheibe (10) einen pneumatischen, hydraulischen oder elektrischen Antrieb aufweist.
